# EUROPÄISCHE PATENTSCHRIFT

(11) **EP 1 292 434 B1**
(45) Veröffentlichungstag und Bekanntmachung des Hinweises auf die Patenterteilung: **08.09.2004**
(21) Anmeldenummer: 01947382.6
(22) Anmeldetag: 20.06.2001
(51) Int. Cl.: B27D 1/04, B27M 3/00, B32B 21/13

(54) **BIEGEFESTE SCHICHTHOLZPLATTE**
BEND-RESISTANT LAMINATED WOOD PANEL
PANNEAU DE BOIS STRATIFIE RESISTANT A LA FLEXION

(30) Priorität: 21.06.2000 DE 10030457
(43) Veröffentlichungstag der Anmeldung: 19.03.2003
(73) Patentinhaber: Moser, Karl, D-86551 Aichach (DE)
(72) Erfinder: Moser, Karl, D-86551 Aichach (DE)
(74) Vertreter: Liska, Horst, Dr.-Ing.
(86) Internationale Anmeldenummer: PCT/EP2001/006982
(87) Internationale Veröffentlichungsnummer: WO 2001/098044

(56) Entgegenhaltungen:
- DE-A- 19 604 433
- US-A- 6 007 659

## Beschreibung

Die Erfindung betrifft eine Schichtholzplatte mit einer Vielzahl von flach aufeinanderliegend gestapelten Schichten, die an paarweise benachbarten Flachseiten miteinander verklebt sind, wobei mindestens zwei der Schichten aus flach nebeneinander mit im Wesentlichen paralleler Faserrichtung angeordneten Holzbrettern gebildet sind, deren Schwind- oder/und Quellkräfte quer zur Faserrichtung der Holzbrettschichten durch mindestens eine weitere der Schichten gesperrt sind. Die Erfindung betrifft ferner ein Verfahren zur Herstellung einer derartigen Schichtholzplatte.

Eine derartige als Brettsperrholzplatte ausgebildete Schichtholzplatte sowie ein Verfahren zu deren Herstellung ist aus der deutschen Patentanmeldung Nr. 196 04 433 bekannt. Bei der bekannten Schichtholzplatte sind die Schwind- oder/und Quellkräfte quer zur Faserrichtung der Holzbrettschichten wiederum durch Holzbrettschichten gesperrt, deren Faserrichtung quer zu der Faserrichtung der erstgenannten Holzbrettschichten verläuft. Sämtliche Holzbrettschichten der bekannten Brettsperrholzplatte besitzen im Wesentlichen die gleiche Dicke und sind vorzugsweise identisch ausgebildet. Diese im Hinblick auf die Faserrichtung mehr oder weniger symmetrische Verteilung ins Längs- und Querrichtung der Platte ist für Sperrholzplatten üblich und gewährleistet eine gleichmäßige Zug- und Biegebelastbarkeit in allen Richtungen.

Beim Einsatz derartiger Schichtholzplatten als Konstruktionsteil für Bauwerke hat sich herausgestellt, dass die Biegesteifigkeit nicht in allen Anwendungsfällen zufriedenstellend ist.

Dementsprechend ist es eine Aufgabe der Erfindung, eine Schichtholzplatte der eingangs erwähnten Art mit einer verbesserten Biegesteifigkeit bereitzustellen, so dass insbesondere deren Einsatzgebiet bei der Konstruktion von Bauwerken erweitert wird.

Die erfindungsgemäße Schichtholzplatte ist dadurch gekennzeichnet, dass der Stapelhöhenanteil aller Holzbrettschichten einschließlich der Sperrschichten an der Gesamtdicke der Schichtholzplatte wenigstens 80 mm beträgt und hierbei das Verhältnis der Dicke jeder einzelnen Sperrschicht zur Dicke jeder einzelnen Holzbrettschicht zwischen 0,01 zu 1 und 0,4 zu 1 liegt und/oder das Verhältnis des Stapelhöhenanteils aller Sperrschichten zum Stapelhöhenanteil der Holzbrettschichten zwischen 0,01 zu 1 und 0,4 zu 1 liegt.

Die erfindungsgemäße Schichtholzplatte besitzt eine Vorzugsrichtung, nämlich die Faserrichtung der Holzbrettschichten, in derdie Zugbelastbarkeit maximal ist. Damit einher geht eine entsprechend erhöhte Biegesteifigkeit, die bei entsprechender Orientierung und Lagerung der Platte zu einer überraschend hohen Biegebelastbarkeit führt, so dass der Einsatzbereich als tragendes Konstruktionsteil (z.B. Wand- oder Deckenteil) erweitert ist.

Verglichen mit einer herkömmlichen Brettsperrholzplatte gleicher Dicke besitzt die erfindungsgemäße Platte eine signifikant erhöhte Biegefestigkeit. Verglichen mit einer herkömmlichen Brettsperrholzplatte der gleichen Biegefestigkeit ist die Dicke der erfindungsgemäßen Platte verringert. Diese Vorteile werden erreicht durch eine ungleichmäßige Verteilung von Last tragenden Brettholzschichten (Längsschichten) und quer zur Faserrichtung dieser Holzbrettschichten sperrenden Sperrschichten (Querschichten). Der Erfindung liegt somit die Grundidee zugrunde, den dickenmäßigen Anteil an Querschichten zugunsten des Anteils von Last tragenden Längsschichten zu verringern, jedoch nur so weit zu verringern, dass die sperrende Wirkung der Querschichten nicht oder nur unwesentlich beeinträchtigt wird. Der gemäß der Erfindung vorgesehene Stapelhöhenanteil aller Holzbrettschichten einschließlich der Sperrschichten an der Gesamtdicke der Schichtholzplatte von wenigstens 80 mm, bevorzugt wenigstens 85 mm, erhöht die Biegebelastbarkeit insbesondere im Hinblick auf die Verwendung als Konstruktionsteil in vorteilhafter Weise weiter.

In einer bevorzugten Ausführungsform weist eine oder mehrere der Holzbrettschichten, insbesondere jede der Holzbrettschichten, eine Dicke im Bereich von 15 mm bis 45 mm auf. Innerhalb dieses Bereichs weiter bevorzugt sind Dicken von 17 mm bis 40 mm. Diese Maßnahme führt zu einer besonders wirtschaftlichen Herstellung der Platte.

Eine oder mehrere der Holzbrettschichten können auf wenigstens einer ihrer Flachseiten mit im Wesentlichen in Faserrichtung verlaufenden Nuten versehen sein. Derartige Nuten dienen während des Pressvorgangs bei der Herstellung der Platte als Senken für den Klebstoff und fördern die Verteilung des Klebstoffs in lateraler Richtung. Damit wird ein Auftreten lokaler Klebstoffansammlungen während des Pressens und die damit verbundene Vergrößerung der Leimfuge verhindert. Die derart ausgebildete Schichtholzplatte eignet sich daher besonders gut für ein Herstellungsverfahren, bei dem geringe Pressdrücke eingesetzt werden. Diese Nuten können beispielsweise derart angeordnet und bemessen werden, wie es in der deutschen Offenlegungsschrift DE 196 04 433 A1 beschrieben ist. Durch Bezugnahme in die vorliegende Anmeldung einbezogen werden sollen hierbei insbesondere die Gestaltungen gemäß den Ansprüchen 3 bis 11 der genannten Offenlegungsschrift.

Gewünschtenfalls können zwischen flach nebeneinander angeordneten Holzbrettern einer Holzbrettschicht Zwischenräume vorgesehen sein, die z.B. als Kanäle zum Durchtritt von Kabeln oder dergleichen dienen können. An den Stellen, an denen derartige Zwischenräume nicht benötigt werden, sind die Bretter bevorzugt miteinander verklebt. Die Sperrschichten können aus einem Holzmaterial gebildet sein, wobei in diesem Fall eine Dicke im Bereich von 1 mm bis 10 mm, insbesondere 3 mm bis 10 mm bevorzugt ist. Beispielsweise können Sperrschichten aus einem Holzfurnier gebildet sein. In diesem Fall ist eine Dicke im Bereich von 1 mm bis 4 mm bevorzugt.

Für die Sperrschichten eignen sich jedoch auch von Holz verschiedene Werkstoffe (Nichtholzmaterial). In diesem Fall sind Dicken im Bereich von 0,5 mm bis 3 mm bevorzugt. Es können vor allem Kunststoffe, Lagen aus Glasfaser-, Kohlefaser-, Textilfasermaterialien oder Naturfaser oder auch andere feste oder hochfeste, z.B. flächige Materialien, eingesetzt werden (z.B. Metallgitter oder Metall/Kunststoff-Verbundfolien). Denkbar ist auch der Einsatz von einzelnen flächigen Materialsträngen, die z.B. nur in Teilbereichen über die Ausdehnung der Platte verteilt eingeklebt werden. Speziell beim Einsatz von Papieren, die in zwei Richtungen zugfest sind, trägt die Belastbarkeit in Richtung der Holzbretter zur Verbesserung der Biegefestigkeit bei. Außerdem wird bei großflächigen Papierbahnen eine zusätzliche Aussteifung in der Plattenebene erreicht. Schließlich vermindern derart dünne Lagen die Wirkung des Rollschubs im Platteninneren erheblich und reduzieren damit sowohl die elastische wie auch die plastische Verformung entsprechend. Das Fasermaterial kann in einer Matrix gebunden sein, und zwar vorgefertigt z.B. in Form einer Kunststoffplatte. Die Matrix kann aber aus dem Klebstoff bestehen, der die benachbarte Holzbrettschicht mit der Sperrschicht verbindet.

Die erfindungsgemäße Schichtholzplatte kann eine oder mehrere Holzwerkstoffplatten (z.B. Sperrholzplatten, Furnierschichtholzplatten, Spanplatten etc.) aufweisen, und zwar bevorzugt im mittleren Bereich des Stapels. In diesem Bereich ist die Belastung vergleichsweise gering ("neutrale Faser"), so dass insbesondere für besonders dicke Schichtholzplattenkonstruktionen die Herstellungskosten ohne wesentliche Beeinträchtigung der Biegesteifigkeit reduziert werden können. Bevorzugt ist eine oder sind mehrere der Holzwerkstoffplatten im Stapel zwischen zwei der Holzbrettschichten angeordnet.

Die Herstellung der Schichtholzplatte ist vereinfacht, wenn zwei oder mehr als zwei der Schichten aus dem gleichen Material, bevorzugt auch mit der gleichen Dicke, gebildet sind. Insbesondere können sämtliche im Stapel innen liegenden Holzbrettschichten, oder auch alle Holzbrettschichten aus den gleich dicken Brettern gebildet sein. Dieser herstellungstechnische Vorteil gilt auch für die Ausbildung der Sperrschichten. Wenngleich als Sperrschichten verwendete Papiere, Folien oder dergleichen neben ihrer sperrenden Wirkung auch weiteren Zwecken dienen können, z.B. der Erzielung einer hohen Winddichtigkeit, einer elektrischen Abschirmung (Metallgitter), einer Erhöhung der Durchschussfestigkeit (Keflar-Fasern) etc., so ist es durchaus denkbar, dass zur Erzielung ganz bestimmter bauphysikalischer Eigenschaften spezielle Lagen an geeigneter Stelle im Stapel zusätzlich vorgesehen werden.

Auf Grund der großen Bedeutung der Zugfestigkeit der äußeren Bereiche der Schichtholzplatte ist es bevorzugt, dass eine äußerste oder beide äußersten Schichten von Holzbrettschichten gebildet sind, oder aber von Sperrschichten gebildet sind, denen auf deren zum Stapelinneren gewandten Seite unmittelbar benachbart eine Holzbrettschicht angeordnet ist.

Unter letzterem Gesichtspunkt ist es ebenfalls vorteilhaft, wenn die 60 % der Gesamtdicke entsprechenden äußeren Bereiche (zu beiden Stapelseiten jeweils 30 %) der Schichtholzplatte zu wenigstens 80 %, insbesondere zu wenigstens 90 %, von Holzbrettschichten gebildet sind. Bevorzugt sind zwischen zwei im Stapel benachbarten Sperrschichten eine oder mehrere Holzbrettschichten angeordnet. Beispielsweise können zwei oder drei Holzbrettschichten im Stapel unmittelbar aufeinander folgen. Der Anteil der Holzbrettschichten, gemessen an der Gesamtanzahl von Holzbrettschichten einschließlich Sperrschichten, liegt vorzugsweise im Bereich von 40 % bis 80 %.

Für den hier besonders interessierenden Anwendungsbereich bei der Konstruktion von Bauwerken lässt sich das in der deutschen Offenlegungsschrift DE 196 04 433 A1 beschriebene Vakuum-Pressverfahren besonders vorteilhaft auf Baustellen einsetzen, da die erfindungsgemäß ausgebildeten, extrem biegefesten Schichtholzplatten vor allem in so großen Formaten herzustellen sind, für die eine stationäre Presse und ein nachfolgender Transport zur Baustelle im Allgemeinen zu aufwendig wären.

Die Erfindung wird nachfolgend an Hand von Ausführungsbeispielen mit Bezug auf die beigefügten Zeichnungen detaillierter beschrieben. Dabei stellen dar:
- Figur 1: eine perspektivische Darstellung eines Teilbereichs einer erfindungsgemäßen Schichtholzplatte,
- Figur 2: einen Querschnitt einer weiteren erfindungsgemäßen Schichtholzplatte, bei der drei Holzbrettschichten im Stapel unmittelbar aufeinander folgen,
- Figur 3: einen Querschnitt einer weiteren erfindungsgemäßen Schichtholzplatte, bei der Holzbrettschichten und Sperrschichten im Stapel alternierend angeordnet sind, und
- Figur 4: einen Querschnitt einer weiteren erfindungsgemäßen Schichtholzplatte, in deren mittleren Bereich drei Spanplatten vorgesehen sind.

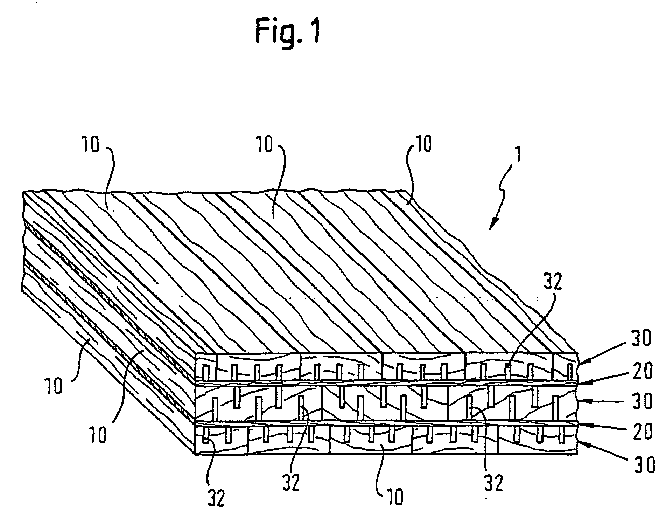

Figur 1 zeigt eine Schichtholzplatte 1, bei der drei Schichten aus flach nebeneinander mit im Wesentlichen paralleler Faserrichtung angeordneten Holzbrettern 10 gebildet sind, deren Schwind- und Quellkräfte quer zur Faserrichtung der Holzbrettschichten 30 durch zwei relativ dünne, einfache Furnierschichten 20 gesperrt sind.

In diesem Beispiel besitzt die mittlere Holzbrettschicht eine Dicke von 33 mm, die beiden äußeren Holzbrettschichten eine Dicke von jeweils 23 mm und die beiden Sperrschichten eine Dicke von jeweils 3 mm. Die Gesamtdicke der Schichtholzplatte setzt sich hier aus dem Stapelhöhenanteil der Holzbrettschichten 30 und dem Stapelhöhenanteil der Sperrschichten 20 zusammen und beträgt somit 85 mm. Das Verhältnis der Dicke jeder Sperrschicht 20 zur Dicke der mittleren Holzbrettschicht 30 beträgt 3/33, also etwa 0,09 : 1. Bezogen auf die Dicke der äußeren Holzbrettschichten 30 beträgt dieses Verhältnis 3/23, also etwa 0,13 : 1. Das Verhältnis des Stapelhöhenanteils aller Sperrschichten 20 zum Stapelhöhenanteil aller Holzbrettschichten 30 beträgt (3 + 3)/(23 + 33 + 23), also etwa 0,08 : 1.

Die Faserrichtung der Furnierschichten 20 verläuft etwa senkrecht zu der Faserrichtung der Holzbrettschichten 30. Wie aus Figur 1 ersichtlich, überwiegt damit der Stapelhöhenanteil der Längsschichten 30 den Stapelhöhenanteil der Querschichten 20, so dass beispielsweise bei Verwendung als Deckenelement in einem Gebäude bei entsprechender Auflagerung der Platte 1 diese eine bedeutend vergrößerte Tragfähigkeit zeigt.

Die Bretter 10 der Holzbrettschichten 30 sind mit Nuten 32 versehen, um die Ausbildung einer dünnen Leimfuge auch bei Anwendung relativ niedriger Pressdrücke bei der Herstellung der Platte 1 zu gewährleisten. Diese Maßnahme hat vor allem bei dem hier besonders interessierenden Einsatz als tragendes Konstruktionselement insofern hohe Bedeutung, als damit die Zuverlässigkeit der Platte 1 erhöht wird, da eine zu dicke Leimfuge die Gefahr von Schubbrüchen im Bereich der Leimfuge zur Folge hätte. Für Anwendungen mit besonders hohen Anforderungen an die Festigkeit ist es denkbar, eine oder mehrere der Holzbrettschichten 30 durch verleimte Mehrfach-Holzschichtplatten (z.B. Drei-Schichtplatten, Furnierschichtholzplatten) mit parallelem Faserverlauf zu ersetzen.

Abweichend vom dargestellten Beispiel könnten die Sperrschichten 20 beispielsweise auch aus einem hochfesten Fasergewebe oder auch Faservlies bestehen, dessen Haupttragrichtung bei anisotroper Belastbarkeit quer zur Faserrichtung der Holzbrettschichten 30 orientiert ist. Denkbar ist auch die Ausbildung einer oder mehrerer Querschichten 20 als Mehrfachfurnier mit paralleler Orientierung der Holzfasern.

Im Folgenden werden weitere Ausführungsbeispiele einer erfindungsgemäßen Schichtholzplatte beschrieben, wobei im Wesentlichen lediglich auf die Unterschiede zu der bzw. den bereits zuvor beschriebenen Ausführungsformen eingegangen wird und hiermit ausdrücklich auf die Beschreibung der vorausgegangenen Ausführungsform(en) Bezug genommen wird. Für analoge Komponenten werden hierbei die gleichen Bezugszeichen verwendet, ergänzt durch einen kleinen Buchstaben zur Unterscheidung der Ausführungsformen.

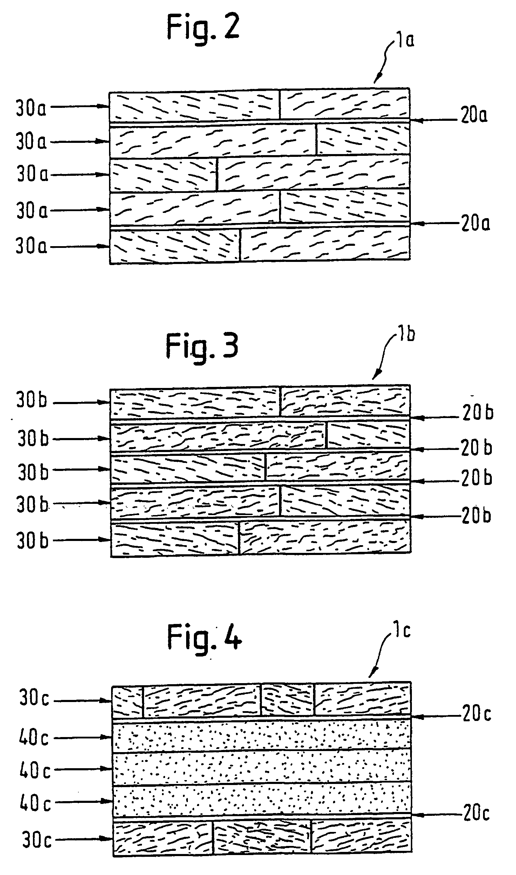

Figur 2 zeigt eine Schichtholzplatte 1 a mit fünf Holzbrettschichten 30a und zwei Fasergewebeschichten 20a. Diese aus Nichtholzmaterial gebildeten Sperrschichten 20a besitzen eine Dicke von etwa 0,5 mm. Zwischen diesen Querschichten 20a sind drei Holzbrettschichten 30a unmittelbar aufeinanderfolgend angeordnet. Der Anteil der Holzbrettschichten 30a, gemessen an der Gesamtanzahl von Holzbrettschichten 30a einschließlich Sperrschichten 20a trägt hier 5/7, also etwa 70 %. Ganz allgemein hat sich ein Anteil im Bereich von 40 % bis 80 % als günstig herausgestellt.

Figur 3 zeigt eine Schichtholzplatte 1b mit einem kleineren Anteil an Holzbrettschichten 30b, nämlich mit einem Anteil von 5/9, also etwa 55 %. In diesem Beispiel sind Holzbrettschichten 30b und Querschichten 20b, die hier aus Aluminiumgittern mit isotroper Zugbelastbarkeit gebildet sind, in alternierender Folge im Stapel angeordnet.

Figur 4 zeigt eine Schichtholzplatte 1 c mit drei Holzwerkstoffplatten (hier Spanplatten des Typs V100) 40c im mittleren Bereich der Platte 1c. Beiderseits dieses Holzwerkstoffplattenstapels sind jeweils eine Sperrschicht 20c sowie eine Holzbrettschicht 30c angeordnet. Vorteilhaft sind damit die äußeren Bereiche der Schichtholzplatte 1c zu einem hohen Anteil von Holzbrettschichten 30c gebildet. Zu diesem hohen Anteil an Holzbrettschichten im äußeren Plattenbereich trägt es ganz allgemein bei, wenn eine äußerste oder beide äußersten (wie dargestellt) Schichten von Holzbrettschichten gebildet sind.

Generell ist es denkbar, aus einzelnen dünnen Furnieren zusammengeklebte Platten, z. B. Furnierschichtholzplatten mitparallel orientierter Faserrichtung, für eine oder mehrere der Schichten 20, 30, 40 zu verwenden.

Falls die Belastbarkeit der zusätzlichen Holzwerkstoffplatten nicht isotrop ist, so ist es bevorzugt, deren Hauptzugbelastbarkeitsrichtung im Wesentlichen parallel zu der Faserrichtung der Holzbrettschichten 30c zu orientieren, um die Biegebelastbarkeit der Platte weiter zu erhöhen. Bei einem Holzwerkstoffplattenstapel im inneren der Schichtholzplatte können einzelne der Holzwerkstoffplatten, bevorzugt in einem mittleren Bereich des Holzwerkstoffplattenstapels angeordnete Holzwerkstoffplatten, jedoch auch quer zu den Holzbrettschichten orientiert werden.

Zusammenfassend wird eine Dickholzplatte mit hoher Biegefestigkeit in einer Haupttragrichtung bereitgestellt, bei der die in Bezug auf Biegung nichttragenden, normalerweise relativ dicken, sperrenden Querlagen als relativ dünne Lagen vorgesehen werden und damit erfindungsgemäß ein statisch günstigerer Plattenaufbau erreicht wird.

Die erfindunsgemäße Schichtholzplatte besitzt vorzugsweise einen Aufbau mit 3, 5, 7 oder 9 aber auch mit mehr Holzbrettschichten, die aus Brettern mit glatten Seitenflächen oder auch aus Nut- und Federbrettern gebildet sein können.

Die zum Aufbau der Holzbrettschichten 30 zu verwendenden Bretter lassen sich z.B. mit einer Dicke von etwa 17 mm, 27 mm, 33 mm oder 38 mm vorsehen. Beim Verleimen mehrerer Holzbrettschichten in unmittelbarer Folge (vgl. Figur 2) sind die Fugen zwischen unmittelbar benachbarten Brettern einer Holzbrettschicht gegenüber den entsprechenden Fugen der darüber- bzw. darunterliegenden Holzbrettschicht versetzt angeordnet.

Die erfindungsgemäße Schichtholzplatte kann sowohl eben als auch einoder zweisinnig gekrümmt hergestellt und verwendet werden, wie dies für bestimmte Anwendungen im Gebäudebau vorteilhaft ist. Bei Verwendung der Platte in einer Deckenkonstruktion kann beispielsweise eine geringe Krümmung vorgesehen werden, um Durchbiegungen auf Grund der zu erwartenden Auflagelasten zu kompensieren.

## Patentansprüche

1. Schichtholzplatte mit einer Vielzahl von flach aufeinanderliegend gestapelten Schichten (20, 30, 40), die an paarweise benachbarten Flachseiten miteinander verklebt sind, wobei mindestens zwei der Schichten (30) aus flach nebeneinander mit im Wesentlichen paralleler Faserrichtung angeordneten Holzbrettern (10) gebildet sind, deren Schwind- oder/und Quellkräfte quer zur Faserrichtung der Holzbrettschichten (30) durch mindestens eine weitere der Schichten (20) gesperrt sind,
**dadurch gekennzeichnet, dass** der Stapelhöhenanteil aller Holzbrettschichten (30) einschließlich der Sperrschichten (20) an der Gesamtdicke der Schichtholzplatte wenigstens 80 mm beträgt und hierbei das Verhältnis der Dicke jeder einzelnen Sperrschicht zur Dicke jeder einzelnen Holzbrettschicht (30) zwischen 0,01 zu 1 und 0,4 zu 1 liegt und/oder das Verhältnis des Stapelhöhenanteils aller Sperrschichten (20) zum Stapelhöhenanteil der Holzbrettschichten (30) zwischen 0,01 zu 1 und 0,4 zu 1 liegt.

2. Schichtholzplatte nach Anspruch 1, wobei eine oder mehrere der Holzbrettschichten (30), insbesondere jede der Holzbrettschichten, eine Dicke im Bereich von 15 mm bis 45 mm aufweist.

3. Schichtholzplatte nach Anspruch 1 oder 2, wobei eine oder mehrere der Holzbrettschichten (30) auf wenigstens einer ihrer Flachseiten mit im Wesentlichen in Faserrichtung verlaufenden Nuten (32) versehen sind.

4. Schichtholzplatte nach einem der Ansprüche 1-3, wobei eine oder mehrere der Sperrschichten (20) aus einem Holzmaterial gebildet sind.

5. Schichtholzplatte nach Anspruch 4, wobei eine oder mehrere der aus Holzmaterial gebildeten Sperrschichten (20), insbesondere jede der aus Holzmaterial gebildeten Sperrschichten, eine Dicke im Bereich von 1 mm bis 10 mm aufweist.

6. Schichtholzplatte nach Anspruch 4 oder 5, wobei eine oder mehrere der aus Holzmaterial gebildeten Sperrschichten (20), insbesondere jede der aus Holzmaterial gebildeten Sperrschichten, aus einem Furnier mit einer Dicke im Bereich von 1 mm bis 4 mm gebildet ist.

7. Schichtholzplatte nach einem der Ansprüche 1-6, wobei eine oder mehrere der Sperrschichten (20) aus Nichtholzmaterial gebildet sind, insbesondere in Form einer Materialbahn oder Materialfolie.

8. Schichtholzplatte nach Anspruch 7, wobei das Nichtholzmaterial Glasfasern, Kohlefasern, Textilfasern oder andere Naturfasern enthält, insbesondere ein Fasergewebe oder Faservlies ist.

9. Schichtholzplatte nach Anspruch 8, **dadurch gekennzeichnet, dass** das Fasermaterial in einer Matrix gebunden ist.

10. Schichtholzplatte nach einem der Ansprüche 7-9, wobei das Nichtholzmaterial Papier und/oder Kunststoff und/oder Metall enthält.

11. Schichtholzplatte nach einem der Ansprüche 7-12, wobei eine oder mehrere der aus Nichtholzmaterial gebildeten Sperrschichten (20), insbesondere jede der aus Nichtholzmaterial gebildeten Sperrschichten, eine Dicke im Bereich von 0,5 mm bis 3 mm aufweist.

12. Schichtholzplatte nach einem der Ansprüche 1-11, umfassend eine oder mehrere Holzwerkstoffplatten (40).

13. Schichtholzplatte nach Anspruch 12, wobei eine oder mehrere der Holzwerkstoffplatten (40) im Stapel zwischen zwei der Holzbrettschichten (30) angeordnet sind.

14. Schichtholzplatte nach Anspruch 12 oder 13, wobei die Holzwerkstoffplatte (40) eine Furnierschichtholzplatte ist.

15. Schichtholzplatte nach Anspruch 12 oder 13, wobei die Holzwerkstoffplatte (40) eine Spanplatte ist.

16. Schichtholzplatte nach einem der Ansprüche 1-15, wobei zwei oder mehr als zwei der Schichten (20, 30, 40) aus dem gleichen Material, bevorzugt auch mit der gleichen Dicke, gebildet sind.

17. Schichtholzplatte nach einem der Ansprüche 1-16, wobei eine äußerste oder beide äußersten Schichten von Holzbrettschichten (30) gebildet sind.

18. Schichtholzplatte nach einem der Ansprüche 1-17, wobei eine äußerste oder beide äußersten Schichten von Sperrschichten (20) gebildet sind, denen auf deren zum Stapelinneren gewandten Seite unmittelbar benachbart eine der Holzbrettschichten (30) angeordnet ist.

19. Schichtholzplatte nach einem der Ansprüche 1-18, wobei die 60 % der Gesamtdicke entsprechenden äußere Bereichen der Schichtholzplatte zu wenigstens 80 %, insbesondere zu wenigstens 90 %, von Holzbrettschichten (30) gebildet sind.

20. Schichtholzplatte nach einem der Ansprüche 1-19, wobei zwischen zwei im Stapel benachbarten Sperrschichten (20) eine oder mehrere der Holzbrettschichten (30) angeordnet sind.

21. Schichtholzplatte nach einem der Ansprüche 1-20, wobei der Anteil der Holzbrettschichten (30), gemessen an der Gesamtanzahl der Holzbrettschichten (30) einschließlich Sperrschichten (20), im Bereich von 40 % bis 80 % liegt.

22. Plattenförmiges Konstruktionsteil für ein Bauwerk, umfassend eine Schichtholzplatte (1) nach einem der Ansprüche 1-21.

23. Verwendung einer Schichtholzplatte nach einem der Ansprüche 1-21 als plattenförmiges Konstruktionsteil für ein Bauwerk.

24. Verfahren zur Herstellung einer Schichtholzplatte (1), bei welchem eine Vielzahl Schichten (20, 30, 40) flach aufeinandergestapelt und mit paarweise benachbarten Flachseiten miteinander verklebt werden, wobei mindestens zwei der Schichten (30) als flach nebeneinander mit im Wesentlichen paralleler Faserrichtung angeordneten Holzbrettern (10) gestapelt werden, deren Schwind- oder/und Quellkräfte quer zur Faserrichtung der Holzbrettschichten (30) durch mindestens eine weitere der Schichten (20) gesperrt werden, wobei der Stapel mit einem luftdichten Folienmantel abgedeckt wird, der Bestandteil einer dicht verschließbaren Umhüllung ist, die zumindest während eines Teils der Kleberabbindezeit evakuiert wird,
**dadurch gekennzeichnet, dass** der Stapelhöhenanteil der Holzbrettschichten (30) einschließlich aller Sperrschichten (20) an der Gesamtdicke der Schichtholzplatte (1) wenigstens 80 mm beträgt und hierbei das Verhältnis der Dicke jeder einzelnen Sperrschicht (20) zur Dicke jeder einzelnen Holzbrettschicht (30) zwischen 0,01 zu 1 und 0,4 zu 1 liegt und/oder das Verhältnis des Stapelhöhenanteils aller Sperrschichten (20) zum Stapelhöhenanteil der Holzbrettschichten (30) zwischen 0,01 zu 1 und 0,4 zu 1 liegt.

25. Verfahren nach Anspruch 24, bei welchem die Schichten (20, 30, 40) derart gewählt und gestapelt werden, daß eine Schichtholzplatte (1) nach einem der Ansprüche 1 bis 21 oder ein Konstruktionsteil nach Anspruch 22 entsteht.

## Claims

1. Laminated wood panel with a plurality of plies (20, 30, 40) which are stacked to lie flat one on top of the other and are glued to one another on flat sides adjoining in pairs, at least two of the plies (30) being formed from wooden boards (10) arranged next to one another in a flat manner with a substantially parallel grain direction, the shrinking or/and swelling forces of the wooden boards (10) being blocked transverse to the grain direction of the wooden board plies (30) by at least one of the other plies (20), **characterised in that** the stack height portion of all the wooden board plies (30), including the barrier plies (20), in the total thickness of the laminated wooden board is at least 80 mm and thus the ratio of the thickness of each individual barrier ply to the thickness of each individual wooden board ply (30) is between 0.01 to 1 and 0.4 to 1 and/or the ratio of the stack height portion of all barrier plies (20) to the stack height portion of the wooden board plies (30) is between 0.01 to 1 and 0.4 to 1.

2. Laminated wood panel according to claim 1, wherein one or more of the wooden board plies (30), in particular each of the wooden board plies, has a thickness in the range of 15 mm to 45 mm.

3. Laminated wood panel according to claim 1 or 2, wherein one or more of the wooden board plies (30) is provided on at least one of its flat sides with grooves (32) substantially extending in the grain direction.

4. Laminated wood panel according to any one of claims 1 to 3, wherein one or more of the barrier plies (20) is formed from a wood material.

5. Laminated wood panel according to claim 4, wherein one or more of the barrier plies (20) formed from wood material, in particular each of the barrier plies formed from wood material, have a thickness in the range of 1 mm to 10 mm.

6. Laminated wood panel according to claim 4 or 5, wherein one or more of the barrier plies (20) formed from wood material, in particular each of the barrier plies formed from wood material, is formed from a veneer with a thickness in the range of 1 mm to 4 mm.

7. Laminated wood panel according to any one of claims 1 to 6, wherein one or more of the barrier plies (20) is formed from a non-wood material, in particular in the form of a material web or material film.

8. Laminated wood panel according to claim 7, wherein the non-wood material contains glass fibres, carbon fibres, textile fibres or other natural fibres, in particular a fibre woven fabric or a fibre nonwoven.

9. Laminated wood panel according to claim 8, **characterised in that** the fibre material is bound in a matrix.

10. Laminated wood panel according to any one of claims 7 to 9, wherein the non-wood material contains paper and/or plastics material and/or metal.

11. Laminated wood panel according to any one of claims 7 to 12, wherein one or more of the barrier plies (20) formed from non-wood material, in particular each of the barriers plies formed from non-wood material, has a thickness in the range of 0.5 mm to 3 mm.

12. Laminated wood panel according to any one of claims 1 to 11, comprising one or more wood material panels (40).

13. Laminated wood panel according to claim 12, wherein one or more of the wood material panels (40) are arranged in the stack between two of the wooden board plies (30).

14. Laminated wood panel according to claim 12 or 13, wherein the wood material panel (40) is a veneer laminated wood panel.

15. Laminated wood panel according to claim 12 or 13, wherein the wood material panel (40) is a chipboard.

16. Laminated wood panel according to any one of claims 1 to 15, wherein two or more than two of the plies (20, 30, 40) are formed from the same material, preferably also with the same thickness.

17. Laminated wood panel according to any one of claims 1 to 16, wherein an outermost or the two outermost plies are formed from wooden board plies (30).

18. Laminated wood panel according to any one of claims 1 to 17, wherein an outermost or the two outermost plies are formed from barrier plies (20), immediately adjacent to which on their side facing the interior of the stack, one of the wooden board plies (30) is arranged.

19. Laminated wood panel according to any one of claims 1 to 18, wherein the outer regions of the laminated wood panel corresponding to 60% of the total thickness are at least 80%, in particular at least 90%, formed from wooden board plies (30).

20. Laminated wood panel according to any one of claims 1 to 19, wherein one or more of the wooden board plies (30) are arranged between two barrier plies (20) adjacent in the stack.

21. Laminated wood panel according to any one of claims 1 to 20, wherein the portion of the wooden board plies (30), measured by the total number of wooden board plies (30) including barrier plies (20), is in the range from 40% to 80%.

22. Panel-shaped construction part for a building, comprising a laminated wood panel (1) according to any one of claims 1 to 21.

23. Use of a laminated wood panel according to any one of claims 1 to 21, as a panel-shaped construction part for a building.

24. Method for producing a laminated wood panel (1), in which a plurality of plies (20, 30, 40) are stacked flat one on top of the other and are glued to one another by flat sides adjoining in pairs, wherein at least two of the plies (30) are stacked as wooden boards (10) arranged flat next to one another with a substantially parallel grain direction, the shrinking or/and swelling forces of which are blocked transverse to the grain direction of the wooden board plies (30) by at least one of the other plies (20), wherein the stack is covered by an air-tight film jacket, which is a component of a tightly closable covering which is evacuated during at least part of the glue setting time, **characterised in that** the stack height portion of the wooden board plies (30), including all barrier plies (20), in the overall thickness of the laminated wood panel (1) is at least 80 mm and thus the ratio of the thickness of each individual barrier ply (20) to the thickness of each individual wooden board ply (30) is between 0.01 to 1 and 0.4 to 1 and/or the ratio of the stack height portion of all barrier plies (20) to the stack height portion of the wooden board plies (30) is between 0.01 to 1 and 0.4 to 1.

25. Method according to claim 24, in which the plies (20, 30, 40) are selected and stacked in such a way that a laminated wood panel (1) is produced according to any one of claims 1 to 21 or a construction part is produced according to claim 22.

## Revendications

1. Panneau de bois stratifié comportant une pluralité de couches (20, 30, 40) empilées les unes sur les autres, à plat, qui sont assemblées par collage sur des faces plates adjacentes appariées, au moins deux des couches (30) étant constituées de planches de bois (10) disposées à plat les unes à côté des autres, avec une orientation sensiblement parallèle des fibres, planches dont les forces de retrait et/ou de gonflement sont bloquées, transversalement à l'orientation des fibres des couches de planches de bois (30), par au moins une autre des couches (20),
**caractérisé en ce que** la part de hauteur d'empilement de toutes les couches de planches de bois (30), y compris les couches de blocage (20), correspond à au moins 80 mm de l'épaisseur totale du panneau de bois stratifié, et le rapport d'épaisseur entre chaque couche de blocage individuelle et l'épaisseur de chaque couche de planche de bois individuelle (30) est compris entre 0,01 à 1 et 0,4 à 1 et/ou le rapport entre la part de hauteur d'empilement de toutes les couches de blocage (20) et la part de hauteur d'empilement des couches de planches de bois (30) est compris entre 0,01 à 1 et 0,4 et 1.

2. Panneau de bois stratifié selon la revendication 1, dans lequel une ou plusieurs couches de planches de bois (30), en particulier chacune des couches de planches de bois, présente(nt) une épaisseur comprise entre 15 mm et 45 mm.

3. Panneau de bois stratifié selon la revendication 1 ou 2, dans lequel une ou plusieurs couches de planches de bois (30) présente/présentent, sur au moins l'une de ses/leurs faces plates, des rainures (32) s'étendant sensiblement dans le sens des fibres.

4. Panneau de bois stratifié selon l'une des revendications 1-3, dans lequel une ou plusieurs des couches de blocage (20) est/sont constituée(s) en bois.

5. Panneau de bois stratifié selon la revendication 4, dans lequel une ou plusieurs couches de blocage (20) constituées en bois, en particulier chacune des couches de blocage constituées en bois, présente(nt) une épaisseur comprise entre 1 mm et 10 mm.

6. Panneau de bois stratifié selon la revendication 4 ou 5, dans lequel une ou plusieurs couches de blocage (20) constituées en bois, en particulier chacune des couches de blocage constituées en bois est/sont constituée(s) d'une feuille de placage présentant une épaisseur comprise entre 1 mm et 4 mm.

7. Panneau de bois stratifié selon l'une des revendications 1-6, dans lequel une ou plusieurs des couches de blocage (20) est/sont constituée(s) dans un matériau non ligneux, se présentant en particulier sous la forme d'une bande ou d'une feuille de matériau.

8. Panneau de bois stratifié selon la revendication 7, dans lequel le matériau non ligneux contient des fibres de verre, des fibres de carbone, des fibres textiles ou d'autres fibres naturelles et est, en particulier, une tissu de fibres ou un non-tissé de fibres.

9. Panneau de bois stratifié selon la revendication 8, **caractérisé en ce que** le matériau fibreux est lié dans une matrice.

10. Panneau de bois stratifié selon l'une des revendications 7-9, dans lequel le matériau non ligneux contient du papier et/ou de la matière synthétique et/ou du métal.

11. Panneau de bois stratifié selon l'une des revendications 7-12, dans lequel une ou plusieurs couches de blocage (20) constituées en matériau non ligneux, en particulier chacune des couches de blocage constituées en matériau non ligneux, présente une épaisseur comprise entre 0,5 mm et 3 mm.

12. Panneau de bois stratifié selon l'une des revendications 1-11, comprenant une ou plusieurs plaques en matériau à base de bois (40).

13. Panneau de bois stratifié selon la revendication 12, dans lequel une ou plusieurs des plaques en matériau à base de bois (40) est située, dans la pile, entre deux couches de planches de bois (30).

14. Panneau de bois stratifié selon la revendication 12 ou 13, dans lequel la plaque en matériau à base de bois (40) est un panneau de bois stratifié de placage.

15. Panneau de bois stratifié selon la revendication 12 ou 13, dans lequel la plaque en matériau à base de bois (40) est un panneau de particules.

16. Panneau de bois stratifié selon l'une des revendications 1-15, dans lequel deux couches, ou plus de deux des couches (20, 30, 40) est/sont constituée(s) dans le même matériau, de préférence en présentant également la même épaisseur.

17. Panneau de bois stratifié selon l'une des revendications 1-16, dans lequel une couche située le plus à l'extérieur, ou les deux couches situées le plus à l'extérieur, est/sont constituée(s) par des couches de planches de bois (30).

18. Panneau de bois stratifié selon l'une des revendications 1-17, dans lequel une couche située le plus à l'extérieur, ou les deux couches situées le plus à l'extérieur, est/sont constituée(s) par des couches de blocage (20), et l'une des couches de planches de bois (30) est située de façon immédiatement adjacente à leur face orientée vers l'intérieur de la pile.

19. Panneau de bois stratifié selon l'une des revendications 1-18, dans lequel les zones externes du panneau de bois stratifié, qui correspondent à 60 % de l'épaisseur totale, sont constituées à au moins 80 %, en particulier à au moins 90 %, de couches de planches de bois (30).

20. Panneau de bois stratifié selon l'une des revendications 1-19, dans lequel une ou plusieurs couche(s) de planches de bois (30) est/sont disposée(s) entre deux couches de blocage (20) qui sont voisines dans la pile.

21. Panneau de bois stratifié selon l'une des revendications 1-20, dans lequel la proportion de couches de planches de bois (30), par rapport au nombre total de couches de planches de bois (30) y compris les couches de blocage (20), est comprise entre 40 % et 80 %.

22. Elément de construction en forme de plaque, destiné à un bâtiment, comprenant un panneau de bois stratifié (1) selon l'une des revendications 1-21.

23. Utilisation d'un panneau de bois stratifié selon l'une des revendications 1-21, en tant qu'élément de construction en forme de plaque, destiné à un bâtiment.

24. Procédé de fabrication d'un panneau de bois stratifié (1), dans lequel une pluralité de couches (20, 30, 40) sont empilées les unes sur les autres, à plat, et assemblées par collage sur des faces plates adjacentes appariées, au moins deux des couches (30) étant constituées de planches de bois (10) disposées à plat les unes à côté des autres, avec une orientation sensiblement parallèle des fibres, planches dont les forces de retrait et/ou de gonflement sont bloquées, transversalement à l'orientation des fibres des couches de planches de bois (30), par au moins une autre des couches (20), la pile étant recouverte par une feuille formant enveloppe étanche à l'air, qui fait partie d'un emballage susceptible d'être fermé de façon étanche, qui est évacué, au moins pendant une partie du temps de prise de la colle,
**caractérisé en ce que** la part de hauteur d'empilement des couches de planches de bois (30), y compris toutes les couches de blocage (20), correspond à au moins 80 mm de l'épaisseur totale du panneau de bois stratifié, et le rapport d'épaisseur entre chaque couche de blocage individuelle (20) et l'épaisseur de chaque couche de planches de bois individuelle (30) est compris entre 0,01 à 1 et 0,4 à 1 et/ou le rapport entre la part de hauteur d'empilement de toutes les couches de blocage (20) et la part de hauteur d'empilement des couches de planches de bois (30) est compris entre 0,01 à 1 et 0,4 et 1.

25. Procédé selon la revendication 24, dans lequel les couches (20, 30, 40) sont sélectionnées et empilées de façon à obtenir un panneau de bois stratifé (1) selon l'une des revendications 1 à 21 ou un élément de construction selon la revendication 22.
